# EUROPÄISCHE PATENTANMELDUNG

(11) **EP 1 076 069 A2**
(43) Veröffentlichungstag der Anmeldung: **14.02.2001**
(21) Anmeldenummer: 00113977.3
(22) Anmeldetag: 01.07.2000
(51) Int. Cl.: C08G 8/10, C08G 8/28

(54) **Resole, Verfahren zu ihrer Herstellung und Verwendung**

(30) Priorität: 13.08.1999 DE 19937858
(71) Anmelder: Bakelite AG, 58642 Iserlohn-Letmathe (DE)
(72) Erfinder: Wernik, Sonja, Dr., 58636 Iserlohn (DE); Dern, H.-Jürgen, Dr., 58708 Menden (DE); Kerkaidoù, Athina, 58644 Iserlohn (DE); Schröter, Stephan, 58642 Iserlohn (DE)

(57) **Zusammenfassung**

Die Erfindung betrifft Resole, die mit organischen Phosphonsäuren und/oder Phosphinsäuren bzw. deren Alkali- und/oder Erdalkalisalzen modifiziert sind. Sie werden erhalten, indem phenolische Verbindungen und Aldehyd in alkalischem Medium im molaren Verhältnis der phenolischen Verbindungen zu Aldehyd im Bereich von 1:0,3 bis 1:6 hergestellt werden, wobei das Reaktionsgemisch 0,1 bis 10 Gew.% einer oder mehrerer organischer Phosphonsäuren und/oder Phosphinsäuren bzw. deren Alkali- und/oder Erdalkalisalze enthält.

## Beschreibung

Die Erfindung betrifft hell aushärtende, in alkalischem Medium kondensierte Phenolharze.

Aufgrund ihrer guten physikalischen Eigenschaften und ausgezeichneten thermischen und chemischen Beständigkeit finden Phenolharze in vielen Anwendungsbereichen Verwendung. Leider haben sie den Nachteil, daß sie sich bei der Lagerung und insbesondere bei der Aushärtung verfärben. Dadurch wird ihr Einsatzbereich, insbesondere bei Beschichtungen oder im Lackbereich stark eingeschränkt (vergl. Ullmann's Encyclopedia of Industrial Chemistry, Fifth Edition, Band 18, 1991, Seite 418).

Durch Veretherung der Resole gelingt es, hellere Filme zu erhalten (vergl. Knop, Pilato; Phenolic Resins; Springer Verlag 1985, Seite 248). Veretherte Resole haben jedoch den Nachteil, daß sie nur eine geringe oder keine Wasserverdünnbarkeit besitzen. Außerdem haben sie längere B-Zeiten, d.h., geringere Reaktivität als nicht veretherte Resole. Die Harze sind weiterhin lösemittelhaltig oder spalten bei höheren Temperaturen die zur Veretherung eingestzten Substanzen, zumeist Alkohole, ab.

Es ist aus EP-A 0 442 218 bekannt, daß farbstabilisierte, mit Alkalimetall katalysierte Phenol-Resole durch Zusatz von Ammonium-Salzen oder -Komplexen hergestellt werden können. Der Zusatz dieser Salze stabilisiert die Farbe der Harze, wenn diese bei Temperaturen bis 150°C gehärtet werden. Jedoch ist der Aufhelleffekt nicht ausreichend und insbesondere dann nicht, wenn diese Resole bei höheren Temperaturen ausgehärtet werden.

Es ist daher Aufgabe der Erfindung, gut wasserverdünnbare Resole bereitzustellen, die nicht verfärbt sind und die auch bei Härtung bei höheren Temperaturen hell aushärten, ohne daß die chemischen und physikalischen Eigenschaften der ausgehärteten Produkte verschlechtert werden. Es ist dadurch weiterhin Aufgabe der Erfindung, die Einsatzbereiche der Phenolharze zu erweitern.

Die Lösung der Aufgabe erfolgt durch Resole gemäß der Ansprüche 1 bis 2 und durch Verfahren zu ihrer Herstellung gemäß der Ansprüche 3 bis 7 . Diese neuen Harze finden bevorzugt Verwendung als Bindemittel für die Deckbindung von Schleifmaterialien, insbesondere von Schleifmaterialien auf Unterlage sowie als Bindemittel oder Bindemittelkomponente für Beschichtungsmittel, Druckfarben, Klebemittel, in Lacken, Formmassen, insbesondere hellen Formmassen, Schäumen oder Faserformteilen oder zur Herstellung von Laminaten, insbesondere von dekorativen Laminaten sowie als Imprägniermittel gemäß der Ansprüche 8 bis 18.

Es wurde gefunden, daß mit organischen Phosphonsäuren und/oder Phosphinsäuren bzw. deren Alkali- und/oder Erdalkalisalzen modifizierte Resole hell und transparent sind, daß sie auch nach längerer Lagerung hell bleiben und daß sie auch bei Aushärtung bei Temperaturen bis 150°C nicht verfärben.

Es ist aus EP-A 14625 bekannt, aus Bisphenol A und Phosphonaten hergestellte Polycarbonate durch Zusatz von Phosphonaten transparent zu machen.

Dieses Verfahren ist, aber bei Resolen nicht anwendbar. Durch Zugabe von Phosphonsäuren oder Salzen der Phosphonsäuren zu Resolen wird keine Aufhellung erreicht.

Es wurde jedoch gefunden, daß helle Resole entstehen, wenn dem Reaktionsgemisch aus phenolischen Verbindungen, Aldehyd und alkalischem Kondensationsmittel vor der Kondensationsreaktion organische Phosphonsäure(n) und/oder Phosphinsäure(n) bzw. deren Alkali- und/oder Erdalkalisalze zugesetzt wird (werden). Bevorzugt werden die phenolische(n) Verbindung(en) und die organische(n) Phosphonsäure(n) und/oder Phosphinsäure(n) bzw. deren Alkali- und/oder Erdalkalisalze vor der Zugabe des alkalischen Katalysators miteinander vermischt.
Sowohl die organischen Phosphonsäuren als auch die Phosphinsäuren bzw. deren Salze reagieren während der Kondensationsreaktion in einer bislang nicht näher spezifizierbaren Reaktion mit einer oder mehreren Komponenten des Reaktionsgemisches. Dadurch entstehen die mit organischen Phosphonsäuren und/oder Phosphinsäuren modifizierten hellen Resole.

Zur Durchführung der alkalischen Kondensationsreaktion werden phenolische Verbindungen und Aldehyde im molaren Verhältnis von 1:0,3 bis 1:6 eingesetzt. Als alkalische Katalysatoren können alle für die Resol-Herstellung bekannten Verbindungen eingesetzt werden, wie z.B. Alkali- und/oder Erdalkalihydroxide, Ammoniak oder Amine, Alkalimetallsulfite und, speziell für die ortho-kondensierten Resole, organische Salze zweiwertiger Metalle wie z.B. Zinkacetat (vergl. Houben Weyl, Band E20 "Makromolekulare Stoffe" Teil 3 (1987), Seite 1804)
Auch die Menge an eingesetztem Katalysator liegt in dem aus bekannten Phenolresol-Synthesen üblichen Bereich.

Die Durchführung der Kondensationsreaktion erfolgt in an sich bekannter Weise durch mehrstündiges Erhitzen der Reaktionspartner in alkalischer, wäßriger Lösung.

Phenolische Verbindungen sind insbesondere Phenol, aber auch aliphatisch oder aromatisch substituierte Phenole, sowie mehrwertige Phenole. Beispiele hierfür sind Kresole, Xylenole, tert. Butyl- oder Octylphenol, Naphthole, p-Phenylphenol, Bisphenole oder Resorcin aber auch Naturstoffe, wie z.B. Tannine, Cardenol oder Cardol. Die phenolischen Verbindungen können als Einzelverbindungen oder im beliebigen Gemisch miteinander eingesetzt werden.

Als Aldehyde sind alle Verbindungen der allgemeinen Formel R-CHO einsetzbar. Beispiele sind Formaldehyd, Acet-, Propion-, n-Butyr- oder Isobutyr-aldehyd, Glyoxal oder Furfural.

Der bevorzugte Aldehyd ist Formaldehyd, der als solcher oder in Form einer Formaldehyd abspaltenden Substanz, wir z.B. Paraformaldehyd oder Trioxan eingesetzt wird. Die bevorzugte Zugabeform ist eine wäßrige Lösung mit einem Formaldehydgehalt von mehr als 30% (Formalin).

Erfindungsgemäß einsetzbare organische Phosphonsäuren sind organische Derivate von Phosphonsäuren, in denen eine oder mehrere der Gruppen -PO(OH)₂ direkt an ein Kohlenstoffatom gebunden sind, wobei der organische Rest eine unsubstituierte oder substituierte Alkyl-, Cycloalkyl-, Aryl-, Arylalkyl-, Hetero-, Heteroalkyl- oder Heteroarylgruppe sein kann.
Die Verbindungen besitzen demnach eine oder mehrere P-C-Bindungen. Bevorzugt werden Alkylphosphonsäuren eingesetzt, in denen eine verzweigte oder unverzweigte Alkylkette mit 2-20 C-Atomen vorliegt, an die mindestens 2 -PO(OH)₂-Gruppen gebunden sind.
Insbesondere bevorzugt werden solche Alkylphosphonsäuren, die zusätzlich mit einem oder mehreren polaren Substituenten substituiert sind. Beispiele für derartige polare Substituenten sind -OH, -OR, -COOH, -COOR, Halogen, ≡N, -NH₂, -NR₂, -COR oder -NO₂. Einsetzbar sind aber auch Nitrilderivate wie z.B. Nitrilotris(alkylenphosphonsäuren), insbesondere Nitrilotris(methylenphosphonsäure).
Einsetzbare Salze dieser Phosphonsäuren sind die Alkali- und/oder Erdalkali-Salze, wobei jeweils alle oder auch nur ein Teil der Phosphonsäuregruppen als Salz vorliegen.

Phosphinsäuren sind Verbindungen der allgemeinen Formel R₁R₂P(O)OH, wobei R₁ und R₂ organische Reste darstellen und gleich oder verschieden sein können. Organische Reste können unsubstituierte oder substituierte Alkyl-, Cycloalkyl-, Aryl-, Arylalkyl-, Hetero-, Heteroalkyl- oder Heteroarylgruppen sein.
Die Verbindungen besitzen demnach P-C-Bindungen.
Bevorzugt werden Dialkylphosphinsäuren eingesetzt, in denen verzweigte oder unverzweigte Alkylketten mit 2-20 C-Atomen vorliegen, an die mindestens 2 -PO(OH)₂-Gruppen gebunden sind.
Insbesondere bevorzugt werden solche Dialkylphosphinsäuren, bei denen die Alkylketten zusätzlich mit einem oder mehreren polaren Substituenten substituiert sind. Beispiele für derartige polare Substituenten sind -OH, -OR, -COOH, -COOR, Halogen, ≡N, -NH₂, -NR₂, -COR oder -NO₂.
Einsetzbare Salze dieser Phosphinsäuren sind die Alkali- und/oder Erdalkali-Salze, wobei jeweils alle oder auch nur ein Teil der Phosphinsäuregruppen als Salz vorliegen.

Die organische Phosphonsäure oder ein Gemisch aus organischen Phosphonsäuren bzw. die Phosphinsäure oder ein Gemisch aus Phosphinsäuren oder ein Gemisch aus Phosphon- und Phosphinsäuren bzw. deren Salze oder Gemische entsprechender Salze oder Gemische der Säuren mit entsprechenden Alkali- oder Erdalkali-Salzen wird dem Reaktionsgemisch vor der Kondensationsreaktion, bevorzugt vor der Zugabe des Kondensationskatalysators in einer Menge von 0,1 bis 10 Gew.%, bezogen auf die eingesetzte phenolische Verbindung, zugegeben.

Im Hinblick auf einen vielfach gewünschten niedrigen Aldehydgehalt des Harzes kann das Kondensationsgemisch nach erfolgter Kondensationsreaktion einer an sich bekannten Nachbehandlung mit Harnstoff unterworfen werden.
In der Regel kann aus dem Reaktionsgemisch nach der Kondensation bzw. nach der Harnstoffzugabe überschüssiges Wasser mittels einer Vakuumdestillation abdestilliert werden.

Das Reaktionsgemisch kann vor oder nach der Vakuumdestillation auf einen pH-Wert im Bereich von 2 bis 9 eingestellt werden. Für die pH-Wert-Einstellung eignen sich sowohl Mineralsauren als auch Carbonsäuren. Bevorzugte Säuren sind Hydroxycarbonsäuren, insbesondere aliphatische Hydroxycarbonsäuren und Borsäure.

Die so erhaltenen Harzlösungen sind und bleiben auch während einer Lagerung von mehreren Wochen transparent und weitgehend farblos oder hell gefärbt.

Eine weitere Verbesserung der Helligkeit kann dadurch erreicht werden, daß die beschriebene Kondensationsreaktion unter Inertgasatmosphäre durchgeführt wird, sowie unter Verwendung von mit Inertgas gespülten, weitgehend sauerstofffreien Rohstoffen.

Die erfindungsgemäßen Harze sind bei höherer Temperatur selbsthärtend und härten auch bei Temperaturen bis zu 150°C ohne nennenswerte Farbvertiefung aus.
Die Harze können aber auch mit Hilfe von an sich als Härter für Resole bekannten Härtern ausgehärtet werden.

Desgleichen können die erfindungsgemäßen Harze, wie von Resolen bekannt, mit anderen Harzen und Polymeren kombiniert und ggf. gehärtet werden.
Beispiele für derartige Harze oder Polymere sind Furan-, Harnstoff-, Melamin- ,Epoxid- oder Polyvinylharze, insbesondere Polyvinylbutyral.
Demgemäß werden die erfindungsgemäßen Harze als alleinige Bindemittel oder als Bindemittelkomponente mit anderen Harzen oder Polymeren eingesetzt.

Als Einsatzgebiete sind im Prinzip alle für Resole bekannte Einsatzgebiete möglich. Aufgrund der Helligkeit der erfindungsgemäßen Harze bieten sich jedoch solche Verwendungen an, bei denen ein helles und transparentes Bindemittel erwünscht ist. Derartige Anwendungen sind Bindemittel für Schleifmittel auf Unterlage, Bindemittel oder Bindemittelkomponente für Beschichtungsmittel oder Lacke, für Druckfarben, für Klebemittel, für die Herstellung von Laminaten, insbesondere von dekorativen Laminaten, in Formmassen, Schäumen oder Faserformteilen oder als Imprägniermittel.

### Beispiele

### Beispiel 1 (Vergleichsbeispiel)

Zu 500 GT Phenol in 125 GT Wasser werden 32 GT 50%ige Natronlauge zugegeben und gut gemischt. Das Gemisch wird auf 60°C aufgeheizt und es werden 760 GT 45%iges Formalin zugegeben.
Es wird 5 h lang bei 60°C kondensiert.
Danach wird das Reaktionsgemisch auf 40°C gekühlt, auf einen pH-Wert von etwa 7 eingestellt und mittels Vakuumdestillation auf eine Viskosität (bei 20°C) von 1000mPas eingestellt.

Die erhaltene Harzlösung ist gelb-braun. Beim Aufbewahren bei Raumtemperatur dunkelt sie langsam bis nach etwa 14 d ein dunkler Braunton erreicht ist.
Bei der Hartung des frisch hergestellten Harzes bei 135°C erfolgt nach ca. 2-3 h eine Verfärbung nach tief-dunkelbraun.

### Beispiel 2 (Vergleichsbeispiel)

Analog zu Beispiel 1 wird ein Resol hergestellt, wobei dem fertigen Resol 5 GT eines Natriumsalzes einer Alkylphosphonsäure mit 2 C-Atomen zugemischt werden.

Die erhaltene Harzlösung ist gelb-braun. Beim Aufbewahren bei Raumtemperatur dunkelt sie langsam bis nach etwa 14 d ein dunkler Braunton erreicht ist.
Bei der Härtung des frisch hergestellten Harzes bei 135°C erfolgt eine nach ca. 2-3 h Verfärbung nach tief-dunkelbraun.

### Beispiel 3 (Vergleichsbeispiel)

Analog zu Beispiel 2 wird ein Resol hergestellt, wobei dem fertigen Resol 5 GT einer Hydroxyalkyldiphosphonsäure mit einer Alkylkette von 9-13 C-Atomen zugemischt werden.

Die erhaltene Harzlösung ist gelb-braun. Beim Aufbewahren bei Raumtemperatur dunkelt sie langsam bis nach etwa 14 d ein dunkler Braunton erreicht ist.
Bei der Härtung des frisch hergestellten Harzes bei 135°C erfolgt nach ca. 2-3 h eine Verfärbung nach tief-dunkelbraun.

### Beispiel 4

Analog zu Beispiel 1 wird ein Resol hergestellt, wobei als einzige Änderung dem Gemisch aus Phenol und Wasser vor der Zugabe der Natronlauge 5 GT einer Hydroxyalkyldiphosphonsäure mit einer Alkylkette von 9-13 C-Atomen zugegeben werden.

Die erhaltene Harzlösung ist hell-gelb. Bei Lagerung bei Raumtemperatur tritt innerhalb von 14 d lediglich eine leichte Farbvertiefung auf.
Bei der Härtung des frisch hergestellten Harzes sowohl bei 135 als auch bei 150°C erfolgt nach ca. 2-3 h lediglich eine leichte Farbvertiefung. Das gehartete Harz ist gelb und transparent.

### Beispiel 5

Analog zu Beispiel 4 wird ein Resol hergestellt, wobei die Herstellung unter Stickstoff-Atmosphäre erfolgt und die eingesetzten Rohstoffe zuvor duch Durchleiten von Stickstoff behandelt wurden.

Die erhaltene Harzlösung ist nahezu farblos. Bei Lagerung bei Raumtemperatur tritt innerhalb von 14 d keine Farbveränderung auf.
Bei der Härtung des frisch hergestellten Harzes sowohl bei 135 als auch bei 150°C erfolgt nach ca. 2-3 h lediglich eine leichte Farbvertiefung. Das gehärtete Harz ist gelblich und transparent.

### Beispiel 6

Analog zu Beispiel 1 wird ein Resol hergestellt, wobei als einzige Änderung dem Gemisch aus Phenol und Wasser vor der Zugabe der Natronlauge 5 GT eines Na-Salzes einer Hydroxyalkyldiphosphonsäure mit einer Alkylkette von 9-13 C-Atomen zugegeben werden.

Die erhaltene Harzlösung ist gelb. Bei Lagerung bei Raumtemperatur tritt innerhalb von 14 d lediglich eine minimale Farbvertiefung auf.

### Beispiel 7

Analog zu Beispiel 5 wird ein Resol hergestellt, wobei als einzige Änderung dem Gemisch aus Phenol und Wasser vor der Zugabe der Natronlauge 5 GT eines Na-Salzes einer Alkyldiphosphonsäure mit einer Alkylkette von 2 C-Atomen zugegeben werden.

Die erhaltene Harzlösung ist gelb. Bei Lagerung bei Raumtemperatur tritt innerhalb von 14 d lediglich eine minimale Farbvertiefung auf.

## Patentansprüche

1. Resole, dadurch gekennzeichnet, daß sie mit organischen Phosphonsäuren und/oder Phosphinsäuren bzw. deren Alkali- und/oder Erdalkalisalzen modifiziert sind.

2. Resole nach Anspruch 1, dadurch gekennzeichnet, daß sie durch alkalische Kondensation von phenolischen Verbindungen mit Aldehyden im molaren Verhältnis der phenolischen Verbindungen zu Aldehyd im Bereich von 1:0,3 bis 1:6 hergestellt werden, wobei das Reaktionsgemisch 0,1 bis 10 Gew.% einer oder mehrerer organischer Phosphonsäuren und/oder Phosphinsäuren bzw. deren Alkali- und/oder Erdalkalisalze enthält.

3. Verfahren zur Herstellung von Resolen gemäß Anspruch 1 oder 2, dadurch gekennzeichnet, daß phenolische Verbindungen und Aldehyd in alkalischem Medium im molaren Verhältnis der phenolischen Verbindungen zu Aldehyd im Bereich von 1:0,3 bis 1:6 hergestellt werden, wobei das Reaktionsgemisch 0,1 bis 10 Gew.% einer oder mehrerer organischer Phosphonsäuren und/oder Phosphinsäuren bzw. deren Alkali- und/oder Erdalkalisalze enthält.

4. Verfahren nach Anspruch 3, dadurch gekennzeichnet, daß die organische Phosphonsäuren und/oder Phosphinsäuren bzw. deren Alkali- und/oder Erdalkalisalze vor der Zugabe des Katalysators der phenolischen Verbindung zugemischt werden.

5. Verfahren nach einem der Ansprüche 3 oder 4, dadurch gekennzeichnet, daß als organische Phosphonsäuren Hydroxyalkylphosphonsäuren mit einer oder mehreren Phosphonsäuregruppen im Molekül eingesetzt werden.

6. Verfahren nach einem der Ansprüche 3 oder 4, dadurch gekennzeichnet, daß als organische Phosphinsäuren Hydroxyalkylphosphinsäuren mit einer oder mehreren Phosphinsäuregruppen im Molekül eingesetzt werden

7. Verfahren nach einem der Ansprüche 3 bis 6, dadurch gekennzeichnet, daß die Kondensationsreaktion unter Inertgasatmosphäre durchgeführt wird.

8. Verfahren nach Anspruch 6, dadurch gekennzeichnet, daß die Kondensationsreaktion unter Inertgasatmosphäre und unter Verwendung von weitgehend sauerstofffreien Rohstoffen durchgeführt wird.

9. Verwendung der Resole gemäß der Ansprüche 1 bis 2 als Bindemittel für die Deckbindung von Schleifmittel auf Unterlage.

10. Verwendung der Resole gemäß der Ansprüche 1 bis 2 als Bindemittel oder Bindemittelkomponente für Beschichtungsmittel.

11. Verwendung der Resole gemäß der Ansprüche 1 bis 2 als Bindemittel oder Bindemittelkomponente in Lacken.

12. Verwendung der Resole gemäß der Ansprüche 1 bis 2 als Bindemittel oder Bindemittelkomponente in Formmassen.

13. Verwendung der Resole gemäß der Ansprüche 1 bis 2 als Bindemittel oder Bindemittelkomponente in Schäumen.

14. Verwendung der Resole gemäß der Ansprüche 1 bis 2 als Bindemittel oder Bindemittelkomponente in Faserformteilen.

15. Verwendung der Resole gemäß der Ansprüche 1 bis 2 als Imprägniermittel.

16. Verwendung der Resole gemäß der Ansprüche 1 bis 2 als Bindemittel oder Bindemittelkomponente bei der Herstellung von Laminaten.

17. Verwendung der Resole gemäß der Ansprüche 1 bis 2 als Bindemittel oder Bindemittelkomponente bei der Herstellung von dekorativen Laminaten.

18. Verwendung der Resole gemäß der Ansprüche 1 bis 2 als Bindemittel oder Bindemittelkomponente für Druckfarben.

19. Verwendung der Resole gemäß der Ansprüche 1 bis 2 als Bindemittel oder Bindemittelkomponente für Klebemittel.
